**Europäisches Patentamt**

**European Patent Office**

**Office européen des brevets**

(19)

(11) Publication number: **0 130 722**
**B1**

(12) **EUROPEAN PATENT SPECIFICATION**

(45) Date of publication of patent specification: **23.03.88**

(51) Int. Cl.⁴: **B 63 B 22/00**

(21) Application number: **84304064.3**

(22) Date of filing: **15.06.84**

(54) **Electric circuit assembly apparatus.**

(30) Priority: **15.06.83 US 504571**

(43) Date of publication of application:
**09.01.85 Bulletin 85/02**

(45) Publication of the grant of the patent:
**23.03.88 Bulletin 88/12**

(84) Designated Contracting States:
**AT BE CH·DE FR GB LI LU NL SE**

(56) References cited:
**GB-A-1 099 593**
**US-A-3 424 623**
**US-A-3 646 505**

(73) Proprietor: **SIPPICAN OCEAN SYSTEMS, INC.**
**Seven Barnabas Road**
**Marion Massachusetts (US)**

(72) Inventor: **Hudson, Alan T.**
**12 Noyes Avenue**
**Mattapoisett Massachusetts (US)**
Inventor: **Gagnon, David P.**
**19 June Lane**
**East Sandwich Massachusetts (US)**
Inventor: **Johns, David W.**
**25 Bay Road**
**Marion Massachusetts (US)**
Inventor: **Langenhein, James W., Jr.**
**Seven Fairland Circle Road 2**
**South Dennis Massachusetts (US)**

(74) Representative: **Deans, Michael John Percy et al**
**Lloyd Wise, Tregear & CO. Norman House**
**105-109 Strand**
**London WC2R OAE (GB)**

EP 0 130 722 B1

Courier Press, Leamington Spa, England.

## Description

This invention, in its broadest context, relates to the fabrication of apparatus incorporating an electronic circuit assembly, and to apparatus so fabricated.

Such apparatus may take many forms and be used in many industries. Electronic circuit assemblies commonly include electronic components which are intolerant of high temperature. For reasons such as the provision of strength or protection or in the provision of the apparatus as a construction made up of smaller sub-assemblies, there will usually be a housing in which the circuit assembly is located.

As will become clear from the detailed description which follows we have found that in the particular example of a sensor buoy (such as the sonobuoy shown in US—A—3 283 348), one example of such electronic circuit assembly apparatus, there are particular advantages in the fabrication of the housing by a particular process, namely blow-moulding, which, so far as we are aware has never previously been proposed for electronic circuit assembly apparatus, because, we believe, the presence of high-temperature-intolerant components would in general lead to a process such as blow-moulding being rejected as a possible candidate. Though these advantages are of particular importance for sensor buoys typically launched from aircraft and having a sensor carried within the buoy until water impact which is then deployed beneath the water surface, signals from the sensor being transmitted to the surface, and typically back to the aircraft, by underwater cable and floating transmitter, the arrangement being particularly useful for the detection of submarines, in which case the sensor will be an acoustic device, these same advantages have a much more general applicability.

Accordingly, the present invention provides a method of fabricating apparatus comprising an electronic circuit assembly and a housing surrounding said assembly, said circuit assembly including high-temperature-intolerant electronic components, characterised in that said method comprises the steps of: extruding a tube of molten thermoplastic material fully around said circuit assembly; moulding said tube between sections of a mould; and injecting high pressure gas into the interior of said material so as to blow mould a thermoplastic shell around said circuit assembly, said mould sections being cooled and said extruding and moulding steps being performed rapidly enough not to damage electronic components of said circuit assembly.

The invention also extends to apparatus fabricated by such a method and further characterised in that it comprises a sensor buoy, such as a sonobuoy, having a terminal weight and sensor for deployment beneath the surface of the water after said buoy impacts the water, a cable connecting said sensor to said circuit assembly; and said circuit assembly is arranged to process the output of said sensor, and an antenna is arranged to transmit a signal corresponding to said output.

In preferred embodiments, the blow-moulded housing forms a seamless, watertight flotation compartment for the circuit assembly, the terminal weight and sensor (e.g., hydrophone) are contained within a ballast cup at the base of the housing and are deployed upon water impact; the blow-moulded housing is moulded tightly around the exterior of the ballast cup to provide a water tight seal, even during water impact; the circuit assembly consists of a vertically-oriented circuit board supported on the ballast cup; an air space separates the board from the housing (which provides insulation from the heat of the blow-moulding process); an antenna is supported on a tab extending through the blow-moulded housing at its top; water cooling is supplied to the moulds used in the blow-moulding process to reduce the temperature elevation of the electronic components; annular grooves are provided on the exterior of the ballast cup for improving the water tightness of the seal to the blow-moulded housing; and aerodynamic fins are moulded into the top of the housing for aerodynamic orientation.

An antenna attached to the buoy housing may be suitably adapted to be deployed during the free-fall of the buoy, prior to its water impact. In preferred embodiments, the antenna is wrapped around the housing; the housing includes a shallow groove for receiving the wrapped-around antenna; the antenna is a blade of greater width than thickness; and the antenna is adapted to provide aerodynamic drag and stability during the buoy's fall.

A water-impact-actuated release means may be suitably provided comprising a plate extending across the bottom opening of the ballast cup and adapted to release the terminal weight and sensor upon water impact but not upon high inertial loading. In preferred embodiments, a weakened region is provided near one tab and the terminal weight is spaced from the plate in the vicinity of that tab so that inertial loading on the weight is resisted by unweakened regions of the plate and so that space is provided between the plate and the weight in the vicinity of the weakened region to enable the water impact force to push the plate inward and thereby break the plate at the weakened region.

The buoy may have an extended spheroid housing, i.e., one having a cylindrical mid section and semispherical end portions. In preferred embodiments, the antenna is connected to the top semispherical portion; the bottom semispherical portion has a flat surface generally at its centre for causing the buoy to dig into the water upon water impact rather than to skip along the surface.

The teachings of the present invention have numerous advantages, both in relation to buoys and to other forms of apparatus. They can provide a simpler and less costly construction, and one that, in the case of a buoy, can safely be allowed to fall freely (without a parachute or similar drag device) to the water surface. Forming the housing by blow-moulding creates a seamless structure with no high stress points; and it avoids the problem that two-piece construction housings have of fracturing, for example, upon impact. In the case of buoys, the need for reinforcement bands, which complicate the manufacturing process and add to the weight of a sonobuoy, is eliminated; and surprisingly the blow-moulding process, even through an extremely hot process, does not harm the temperature sensitive electronic components. Around the ballast cup of a buoy, blow-moulding provides an excellent seal, one that withstands water impact. Because the buoy antenna is released at launching, it provides additional drag and stability during free flight to ensure that the buoy impacts the water at the desired velocity and in a nose down orientation so that the shear plate will break; launch release also eliminates the need for an antenna release mechanism at impact, which complicates the buoy's manufacture and increases its weight. The extended spheroid shape of the buoy housing also has advantages; it provides a high centre of buoyancy and low centre of gravity to reduce the sonobuoy's rolling motion and provide a more stable platform for transmission of the alarm signal, it provides high drag and stability during free fall, it has good impact strength, and the preferred flattened bottom prevents the buoy from skipping across the water at initial impact.

The invention is hereinafter more particularly described by way of example only with reference to an embodiment of sensor buoy, but it is to be understood that the invention is not restricted to this particular form of apparatus alone.

A detailed description of the fabrication, structure and deployment of a preferred embodiment of sensor buoy is hereinafter described by reference to and as shown in the accompanying drawings, in which:—

Figure 1 is a group of four diagrammatic views of the deployment of said embodiment into the water;

Figure 2 is an exploded perspective view of said embodiment;

Figure 3 is a sectional view of the ballast cup and hydrophone/terminal weight assembly of the apparatus of Figures 1 and 2;

Figure 4 is a sectional view taken along the line 4—4 of Figure 3 showing the sonobuoy after the shear plate has broken;

Figure 5 is a block diagram of the signal processor of said embodiment; and

Figures 6a to 6g are perspective views of steps in the manufacture of said embodiment.

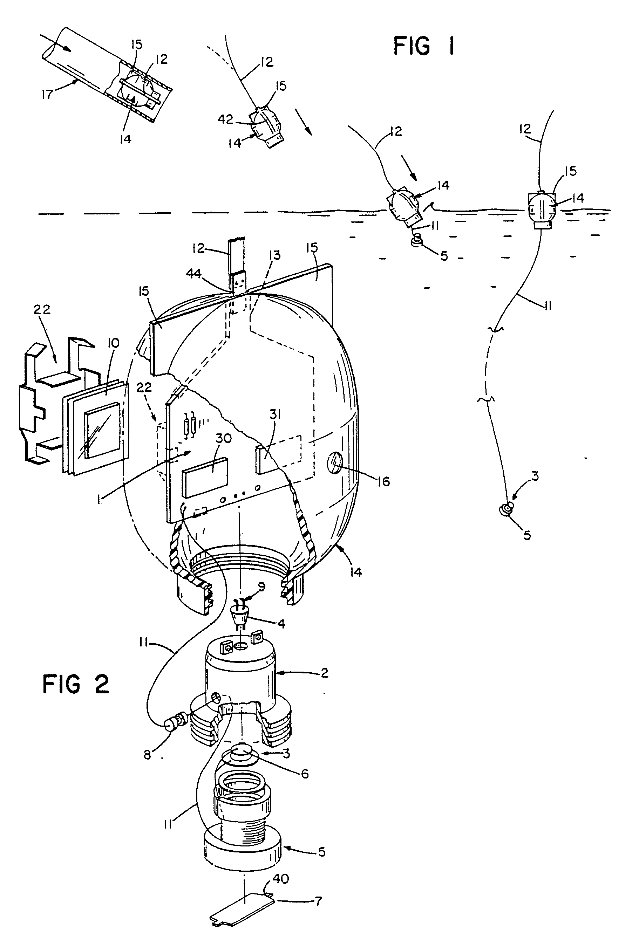

Referring to Figures 1 and 2, there is shown a sonobuoy consisting of a printed circuit board 1, ballast cup 2, omni-directional hydrophone 3, terminal weight 5, shear plate 7, battery pack 10, transmitting antenna 12, and polyethylene buoy housing 14. Mounted to the printed circuit board is a conventional transmitter, microprocessor chip 31 (TMS 1000, Texas Instruments), integrated circuit 30, and associated discrete components. Three flat pack batteries (6 Volt Polaroid P-80 Polapulse) are contained in case 22 that snaps on to the printed circuit board. Antenna tab 13 is riveted to the top of the board. The board is riveted at the bottom to the ballast cup. At the same time, rubber plug 4 attached to the bottom of the board is inserted through a hole in the top surface of the ballast cup. This rubber plug acts as a seal when the buoy is in the water. Also, the plug houses two salt water electrodes 9 that are connected to the circuit board and that protrudes from the plug's bottom.

The hydrophone consists of a flexural transducer, which is a small thin piezoelectric ceramic disc 6 mounted on a brass plate. The ceramic disc surface is silvered and an electrode is soldered to this surface. Another electrode is soldered to the brass ring. One end of two conductors in cable 11 is connected to each electrode. The transducer is placed on a plastic ring which is cemented into the zinc terminal weight and then potted over. The plastic ring and potting serve to protect and isolate the connections.

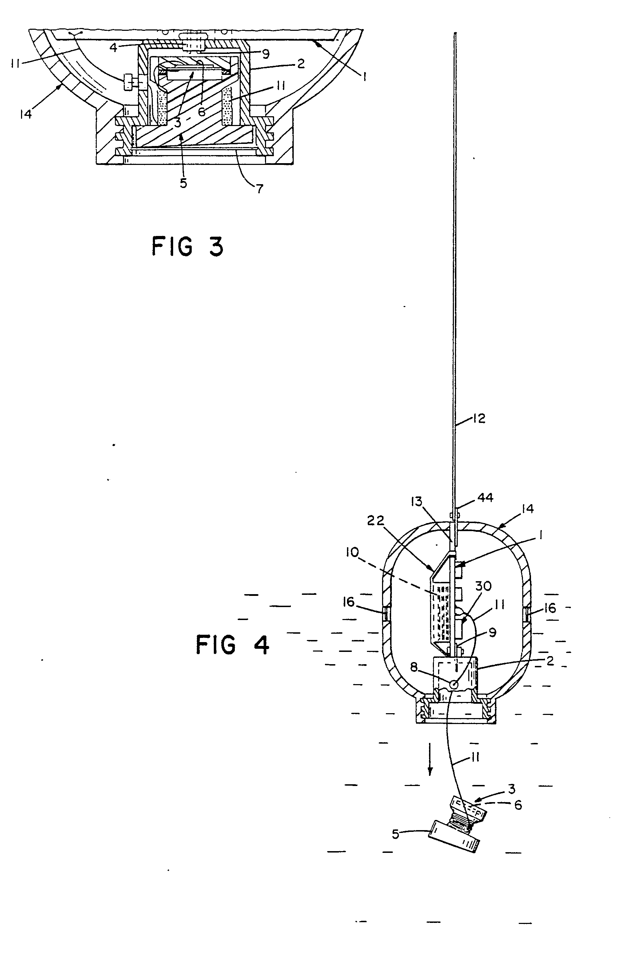

Around the outside of the terminal weight is wound at least 300 feet (914 m) of three-strand cable. Two strands are conductors for carrying the output signal of the hydrophone. The third strand is Kevlar (Dupont), a high strength-to-weight ratio polymer. Only a very thin (200 Denier) strand of Kevlar is needed, thus reducing the cross section of the cable and thus its drag in the water. The cable at the outside end of the spool is fed through rubber grommet 8 that fits into a hole in the ballast cup and the two wires contained in the cable are connected to the circuit board. The terminal weight/hydrophone assembly is placed inside the ballast cup, and shear plate 7, with its two retaining tabs, is inserted into grooves on the inside of the ballast cup. As shown in Fig. 3, the left retaining tab of the shear plate supports the terminal weight and will prevent the terminal weight from prematurely falling out of the ballast cup due to inertial forces during handling before deployment. The right retaining tab is scored at 40 (Figs. 2 and 4) and is spaced below the terminal weight as a result of the tapered shape of the bottom of the weight. The spacing between the plate and the weight in the vicinity of the weakened (scored) region allows the plate to be pushed inward at water impact, thus tearing or rupturing the plate. On the other hand, the space prevents inertial loads on the weight from being applied to the weakened region, thus ensuring that the plate will not accidentally rupture during handling.

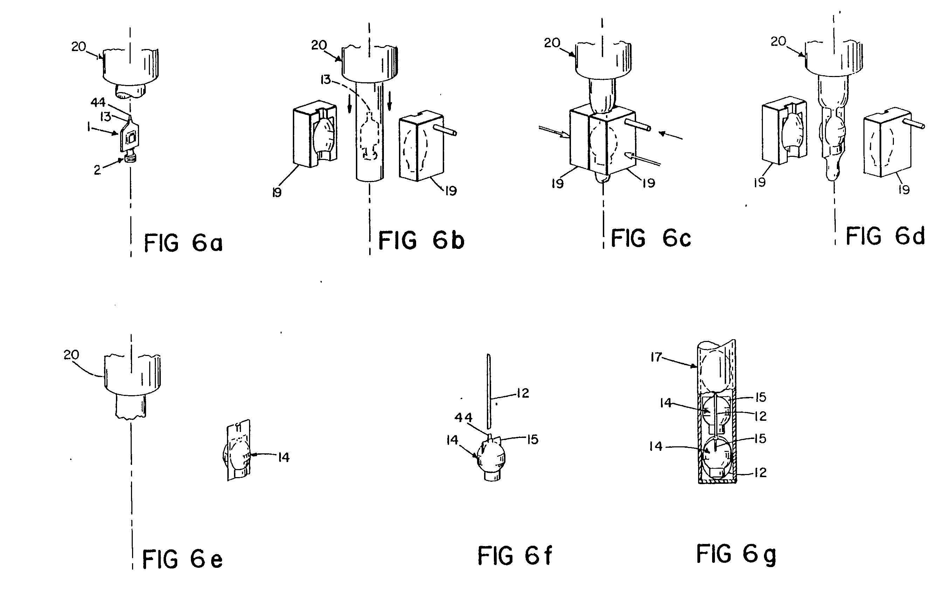

To form the buoy housing, the printed circuit board and ballast cup assembly are placed (Fig. 6a) on a support stand (not shown). While the two halves of housing mould 19 are spaced apart, extruder 20 extrudes a tube of high density polyethylene around the electronics and ballast/hydrophone assembly (Fig. 6b). The thickness of the tube varies from 0.100 inches (0.254 cm) at the bottom to 0.075 inches (0.1905 cm) at the top. Next, the two halves of the mould are pressed together (Fig. 6c), compressively moulding the polyethylene around the base of the ballast cup and around tab 13 at the top of the printed circuit board. A needle 21 is now inserted into the pinched off tube and high pressure air is blown into the tube, forcing the tube to assume the shape of the inside of the mould. This blow moulding operation is a hot process. To keep the maximum temperature to which the components on the circuit boards are exposed below their maximum temperature of 185°F (85°C), the moulding is done quickly and the moulds themselves are water cooled. The result of the blow moulding operation is a one piece seamless housing with no structural weak points. The housing is trimmed (Figs. 6d—6f), leaving an extended spheroid (cylindrical middle section with semispherical upper and lower ends) and two stabilizing fins 15. Two scuttle plugs 16 (Fig. 2), made of Polyox (DuPont), a water soluble plastic, are pressed into holes formed after molding in the midsection of the housing. Steel antenna 12 is then riveted (Fig. 6f) to tab 44 which is made from the same antenna material and which extends from the circuit board 1. (The full antenna is not installed prior to molding to reduce the length of extruded polyethylene required). A shallow groove 42 (Fig. 1) is formed during molding completely around the outside of the housing to form a receptacle for the steel antenna when it is wrapped around the housing and inserted in launching cylinder 17 (Fig. 6g).

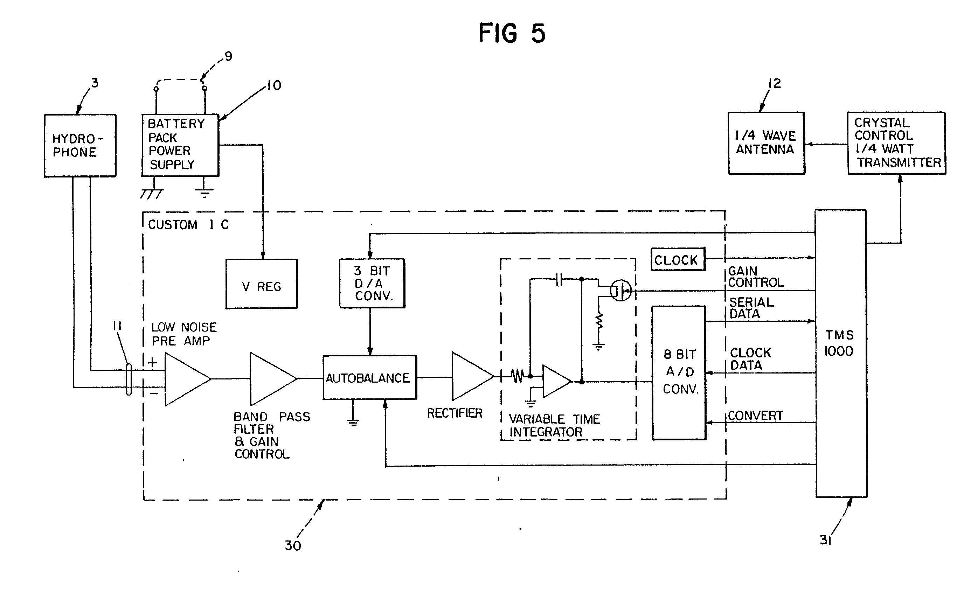

The components of the signal processor, which controls the detection operation of the sonobuoy, are shown in Fig. 5. The hydrophone signal is preamplified, and then filtered and amplified to leave only the signal and noise in the frequency band of interest. Any DC bias is subtracted out through the use of a microprocessor-controlled auto-balance circuit and the resulting AC signal is rectified.

When the amplitude of the AC signal at the analog-to-digital converter input is greater than a threshold voltage stored in the microprocessor, the latter will modulate the transmitter via the alarm output, and the transmitter will send out this signal via the antenna. This will continue for as long as the target is present, or 15 minutes, the life of the batteries. If the transmitter is never used, the batteries will operate the rest of the circuitry for about four hours.

The buoy is 4.5 inches (11.43 cm) in diameter, 5.6 inches (14.224 cm) in height, and 1.4 lb (0.555 Kg) in weight. Its centre of gravity is 1.7 inches (4.318 cm) from its base, and its centre of buoyancy is 1.95 inches (4.953 cm) from its base. The antenna is 18 inches (45.72 cm) long and 0.5 inches (1.27 cm) wide.

Operation

The sonobuoys are deployed as shown in Fig. 1. One buoy at a time is launched from a cylinder (each of which contains six buoys) carried by an aircraft. Antenna 12 springs back to its relaxed position upon the sonobuoy's exit from the cylinder, and the antenna acts as a tail to provide, along with the fins, drag and stability for the sonobuoy as it falls freely to the water. The fins are particularly helpful to initially orienting the buoy immediately after launch. Upon impact, the scored right retaining tab 40 of the shear plate 7 (Fig. 3) will break. This releases the hydrophone/terminal weight assembly from the ballast cup, allowing the assembly to fall down into the water until the spool of cable completely unwinds. The release of the assembly will also expose the salt water electrodes to the salt water, completing a circuit that turns on the power supply. The signal processor initializes the system by setting the initial gain of the integrator and the initial threshold level. The sonobuoy is now ready for its normal mode of operation.

In its normal mode of operation, the sonobuoy listens for submarines by measuring the ambient noise detected by the hydrophone across a frequency range. When the detected noise rises above a stored threshold level, the transmitter sends out an alarm signal as long as the target is present or until the battery power runs out. If no submarine is detected, the transmitter is silent. The scuttle plugs will erode after about eight hours, and the sonobuoy will sink.

Persons skilled in the art of electronic circuit assembly apparatus will have no difficulty envisaging other embodiments of such apparatus than the specific sensor buoy hereinabove described in detail with reference to the accompanying drawings. The blow-moulding process herein disclosed can readily be employed to enclose other types of electronic circuit assemblies including high-temperature-intolerant circuit assemblies than those for use in a sensor buoy.

**Claims**

1. A method of fabricating apparatus comprising an electronic circuit assembly and a housing surrounding said assembly, said circuit assembly including high-temperature-intolerant electronic components, characterised in that said method comprises the steps of: extruding a tube of molten thermoplastic material fully around said circuit assembly; moulding said tube between sections of a mould; and injecting high pressure gas into the interior of said material so as to blow mould a thermoplastic shell around said circuit assembly, said mould sections being cooled and said extruding and moulding steps being performed rapidly enough not to damage electronic components of said circuit assembly.

2. A method of fabricating a sensor buoy such as a sonobuoy, comprising the steps of: installing an electronic circuit assembly for said sensor buoy on a ballast cup or other base, said circuit assembly including high-temperature-intolerant electronic components; extruding a tube of molten thermoplastic material fully around said circuit assembly and base; and moulding said tube between sections of a mould and injecting high pressure gas into the interior of said material so as to blow mould a thermoplastic shell around said circuit assembly and base, said mould sections being cooled and said extruding and moulding steps being performed rapidly enough not to damage electronic components of said circuit assembly.

3. Apparatus fabricated by a method according to Claim 1, further characterised in that it comprises a sensor buoy, such as a sonobuoy, having a terminal weight and sensor for deployment beneath the surface of the water after said buoy impacts the water, a cable connecting said sensor to said circuit assembly; and in that said circuit assembly is arranged to process the output of said sensor and an antenna is arranged to transmit a signal corresponding to said output.

4. A buoy according to Claim 3, further characterised in that said blow moulded thermoplastic shell forms a water-tight flotation compartment for supporting said circuit assembly and antenna on the surface of the water.

5. A buoy according to Claim 3 or Claim 4; further characterised in that said housing contains said terminal weight and sensor prior to their deployment.

6. A buoy according to Claim 5, further characterised in that said buoy is adapted to be ejected from an airplane and to fall to the water without a parachute or other drag device and in that there is provided a water-impact-actuated release means for deploying said terminal weight and sensor.

7. A buoy according to Claim 5 or Claim 6, further characterised in that said housing comprises a ballast cup at its base, said blow moulded shell being moulded around the exterior of said ballast cup and said terminal weight and sensor being stowed within said ballast cup prior to their deployment.

8. A buoy according to both Claim 6 and Claim 7, further characterised in that said release means comprises a plate extending across the bottom opening of said ballast cup and adapted to rupture upon water impact.

9. A buoy according to Claim 7 or Claim 8, further characterised in that said circuit assembly includes at least one circuit board supported on said ballast cup and completely surrounded by said blow moulded shell.

10. A buoy according to Claim 9, further characterised in that said circuit board is generally vertically oriented when said buoy is floating upright and is separated from said shell by an air space.

11. A buoy according to Claim 9 or Claim 10, further characterised in that a tab extends from said circuit board through said blow moulded shell, said shell being moulded around said tab, and said antenna being connected to the portion of said tab extending outside of said shell.

12. Apparatus fabricated by a method according to Claim 1, further characterised in that it comprises a sensor buoy, such as a sonobuoy; in that said housing is adapted to be ejected from an aircraft and to fall freely without the assistance of a parachute to the water surface; and in that said circuit assembly includes a transmitter, and is connected to an antenna attached to said housing, said antenna extending from said housing and being adapted to be deployed during the fall of said buoy.

13. A buoy according to Claim 12, further characterised in that said antenna and housing are adapted to permit said antenna to be stowed prior to ejection by wrapping the antenna around the exterior of said housing.

14. A buoy according to Claim 13, further characterised in that said antenna is a blade with a width much greater than its thickness.

15. A buoy according to Claim 14, further characterised in that said housing includes a groove around its exterior for receiving said blade antenna when said antenna is wrapped therearound prior to ejection.

16. A buoy according to any of Claims 3 to 15, further characterised in that said antenna is a narrow projection, narrower in width than said housing, and is adapted to provide aerodynamic stability during the fall of said buoy by maintaining the buoy in an orientation in which the antenna extends rearwardly in a direction opposite that of the buoy's falling motion.

17. A buoy according to any of Claims 3 to 16 further characterised in that said circuit assembly inside said blow-moulded housing comprises all the electronic circuitry of said buoy.

18. A buoy according to any of Claims 3 to 17, wherein said buoy is a sonobuoy, and is further characterised in that said sensor is a hydrophone and said circuit assembly includes means for detecting the presence of a submarine from the output of said hydrophone and means for causing said transmitter to transmit an alarm via said antenna to a remote receiver.

19. Apparatus according to any of Claims 3 to 18, further characterised in that said blow moulded shell is moulded in one piece without seams.

20. A buoy according to any of Claims 3 to 19, further characterised in that said buoy has a flat surface generally at the centre of its bottom surface for causing the buoy to dig into the water upon impact rather than to skip along the surface.

**Patentansprüche**

1. Eine Methode zur Herstellung von Apparaten die eine elektronische Schaltungszusammensetzung und ein diese Zusammensetzung umschliessendes Gehäuse enthält, wo diese Schaltungszusammensetzung hohe Temperatur nicht tolerierende elektronische Bauteile einschliesst, dadurch gekennzeichnet daß diese Methode die folgenden Schritte enthält: Strangpressen eines Rohrs des geschmolzenen Thermoplastmaterials völlig um diese Schaltungszusammensetzung; das Formen dieses Rohrs zwischen Teilen einer Gußform; und das Einspritzen von Gas mit hohem Druck in das Innere dieses Materials,

sodaß eine Thermoplastschale um diese Schaltungszusammensetzung formgebeblasen wird, wobei die Formteile gekühlt werden und die Strangpressen- und Formschritte schnell genug erfolgen sodaß die elektronischen Bauteile dieser Schaltungszusammensetzung nicht beschädigt werden.

2. Eine Methode zur Herstellung einer Fühlerboje wie z.B. eine Schallboje, die die folgenden Schritte enthält: das Anbringen einer elekronischen Schaltungszusammensetzung für diese Fühlerboje auf einer Ballasttasse oder einer anderen Base, wo diese Schaltungszusammensetzung hohe Temperatur nicht tolerierende elektronische Bauteile einschliesst; Strangpressen eines Rohrs des geschmolzenen Thermoplastmaterials völlig um diese Schaltungszusammensetzung und Base; und das Formen dieses Rohrs zwischen Teilen einer Gußform und das Einspritzen von Gas mit hohem Druck in das Innere dieses Materials sodaß eine Thermoplastschale um diese Schaltungszusammensetzung und Base formgeblasen wird, wobei die Formteile gekühlt werden und die Strangpressen- und Formschritte schnell genug erfolgen sodaß die elektronischen Bauteile dieser Schaltungszusammensetzung nicht beschädigt werden.

3. Appareat nach einer Methode von Anspruch 1 hergestellt, dadurch gekennzeichnet daß es eine Fühlerboje, wie z.B. eine Schallboje einschliesst, die ein Grenzgewicht und eine Fühler zum Gebrauch unter dem Wasserspiegel nachdem diese Boje auf das Wasser auftrifft, ein den Fühler zu dieser Schaltungszusammensetzung verbindendes Kabel enthält, und daß diese Schaltungszusammensetzung zum Verarbeiten des Ausgangssignals dieses Fühlers und die Antenne zum Senden eines dem Ausgangssignal entsprechenden Signal angeordnet ist.

4. Eine Boje nach Anspruch 3, dadurch gekennzeichnet daß diese formgeblasene Thermoplastschale eine wasserdichte Flotationsabteilung zum Stützen dieser Schaltungszusammensetzung und Antenne auf dem Wasserspiegel bildet.

5. Eine Boje nach Anspruch 3 oder Anspruch 4, dadurch gekennzeichnet daß das Gehäuse ein Grenzgewicht und einen Fühler vor dem Gebrauch enthält.

6. Eine Boje nach Anspruch 5, dadurch gekennzeichnet daß diese Boje von einem Flugzeug ausgeworfen werden kann und es ohne einen Fallschirm oder andere Strömungswiderstandeinrichtung zum Wasser fallen kann, und daß es mit vom Wasseraufschlag aktivierte Auslösemittel zum Gebrauch des Grenzgewichts und Fühlers ausgerüstet ist.

7. Eine Boje nach Anspruch 5 oder Anspruch 6, dadurch gekennzeichnet daß das Gehäuse eine Ballasttasse an der Base enthält, die formgeblasene Schale um die Aussenseite dieser Ballasttasse geformt wird und dieses Grenzgewicht und dieser Fühler vor dem Gebrauch innerhalb dieser Ballasttasse untergebracht werden.

8. Eine Boje nach Anspruch 6 und Anspruch 7, dadurch gekennzeichnet daß die Auslöseeinrichtung eine sich über die untere Öffnung der Ballasttasse erstreckende Platte enthält und zum Brechen nach dem Wasseraufschlag eingerichtet ist.

9. Eine Boje nach Anspruch 7 oder Anspruch 8, dadurch gekennzeichnet daß die Schaltungszusammensetzung mindestens eine Schaltungskarte, die von der Ballasttasse gestützt und vollkommen von der formgeblasenen Schale umgeben ist.

10. Eine Boje nach Anspruch 9, dadurch gekennzeichnet daß die Schaltungskarte sich senkrecht orientiert befindet wenn diese Boje aufrecht schwimmt und durch eine Luftspalte von dieser Schale getrennt ist.

11. Eine Boje nach Anspruch 9 oder Anspruch 10, dadurch gekennzeichnet daß sich ein Lappen von der Schaltungskarte durch die formgeblasene Schale erstreckt, wo diese Schale um diesen Lappen geformt wird und die Antenne zum ausser der Schale herausragendem Teil dieses Lappens verbunden wird.

12. Apparat nach der Methode von Anspruch 1 hergestellt, dadurch gekennzeichnet daß es eine Fühlerboje, wie z.B. eine Schallboje einschliesst, wo das Gehäuse zum Auswerfen aus einem Flugzeug geeignet ist und es frei ohne die Hilfe eines Fallschirms zum Wasserspiegel fallen kann, und wo die Schaltungszusammensetzung einen Sender enthält, und zu einer an diesem Gehäuse befestigten Antenne verbunden ist, wo sich diese Antenne von diesem Gehäuse erstreckt und zum Gebrauch während dem Fallen dieser Boje angepasst ist.

13. Eine Boje nach Anspruch 12, dadurch gekennzeichnet daß diese Antenne und dieses Gehäuse es erlauben daß die Antenne vor dem Auswurf durch das Umhüllen der Antenne um die Aussenseite des Gehäuses verstaut ist.

14. Eine Boje nach Anspruch 13, dadurch gekennzeichnet daß diese Antenne ein Blatt mit einer Grösse die viel größer als die Dicke ist.

15. Eine Boje nach Anspruch 14, dadurch gekennzeichnet daß das Gehäuse eine Nute um die Aussenseite zum Unterbringen der Blattantenne enthält wenn diese Antenne vor dem Auswurf darum gehüllt ist.

16. Eine Boje je nach irgendeiner der Ansprüche 3 bis 15, dadurch gekennzeichnet daß die Antenne ein schmaler Teil, schmaler in Breite als das Gehäuse ist und daß sie aerodynamische Stabilität während den Fallen diese Boje sichert indem die Boje in einer Orientierung erhalten wird wo die Antenne sich nach hinten in der entgegengesetzten Richtung zu der Bojes Fallbewegung erstreckt.

17. Eine Boje je nach irgendeiner der Ansprüche 3 bis 16, dadurch gekennzeichnet daß die Schaltungszusammensetzung innerhalb des formgeblasenen Gehäuses sämtliche elektronische Schaltungen dieser Boje enthält.

18. Eine Boje je nach irgendeiner der Ansprüche 3 bis 17, wo die Boje eine Schallboje ist und dadurch gekennzeichnet wird daß der Fühler ein Geräuschempfänger ist und daß die Schaltungszusammensetzung ein Mittel zum Erfassen der Nähe eines Unterseeboots von dem Ausgangssignal dieses Geräuschempfängers und Mittel für das Senden einer Warnung vom Sender über dieser Antenne zu einem fernen Empfänger enthält.

19. Apparat je nach irgendeinem der Ansprüche 3 bis 18, dadurch gekennzeichnet daß die formgeblasene Schale in einem Stück ohne Nähte geformt wird.

20. Eine Boje je nach irgendeinem der Ansprüche 3 bis 19, dadurch gekennzeichnet daß diese Boje eine flache Oberfläche in der Mitte der unteren Oberfläche hat sodaß die Boje am Aufschlag in das Wasser einschlägt, anstatt an der Oberfläche zu hüpfen.

**Revendications**

1. Une méthode de fabrication d'appareil comprenant un assemblage de circuit électronique et un bâti entourant ledit assemblage, ledit assemblage de circuit comprenant des composants électroniques ne supportant pas les hautes températures, caractérisé par le fait que ladite méthode comprend les demarches suivantes: l'extrusion d'un tube de matière thermoplastique fondu entourant entièrement ledit assemblage de circuit; le moulage dudit tube entre les sections d'un moule; et l'injection de gaz à haute pression à l'interieur de la dite matière de facon à mouler une enveloppe thermoplastique autour dudit assemblage de circuit, lesdites sections de moulage étant refroidies et lesdites démarches d'extrusion et de moulage étant executées assez rapidement pour ne pas endommager les composants électroniques dudit assemblage de circuit.

2. Une méthode de fabrication d'une balise détecteur telle qu'une balise sonar, comprenant les démarches suivantes: l'installation d'un assemblage de circuit électronique pour ladite balise détecteur sur un godet de ballast ou autre base, ledit assemblage de circuit comprenant des composants électroniques ne supportant pas les hautes températures; l'extrusion d'un tube de matière thermoplastique fondu entourant entièrement lesdits assemblages de circuit et base; et le moulage dudit tube entre les sections d'un moule et l'injection d'un gaz à haute pression à l'intérieur de ladite matière de façon à mouler une enveloppe thermoplastique autour dudit assemblage de circuit et base, lesdites sections de moulage étant refroidies et lesdites démarches d'extrusion et de moulage étant effectuées assez rapidement pour ne pas endommager les composants électroniques dudit assemblage de circuit.

3. Un appareil fabriqué selon une méthode suivant la revendication 1, caracterisé de plus par le fait qu'il comprend une balise détecteur, telle qu'une balise sonar, ayant un poids d'extrémité et un détecteur pour un déploiement sous la surface de l'eau après que ladite balise ait heurté l'eau, un cable reliant ledit détecteur audit assemblage de circuit; et par le fait que ledit assemblage de circuit soit disposé pour traiter le debit dudit détecteur et une antenne soit disposée pour transmettre un signal correspondant audit debit.

4. Une balise selon la revendication 3, caractérisée de plus par le fait que l'enveloppe moulée thermoplastique forme un compartiment de flottaison étanche pour supporter ledit assemblage de circuit et l'antenne sur la surface de l'eau.

5. Une balise selon la revendication 3 ou la revendication 4, caractérisée de plus par le fait que le bâti contient lesdits poids d'extrémité et le détecteur avant leur déploiement.

6. Une balise selon la revendication 5, caractérisée de plus par le fait que ladite balise est adaptée à être éjectée d'un avion et à tomber dans l'eau sans parachute ou autre appareil de trainage et dans le fait qu'un moyen de largage déclanché par l'impact de l'eau est prévu pour le déploiement desdits poids d'extrémité et détecteur.

7. Une balise selon la revendication 5 ou la revendication 6, caractérisée de plus par le fait que ledit bâti comprend un godet de ballast à sa base, ladite enveloppe moulée étant moulée autour de l'extérieur dudit godet de ballast et lesdits poids d'extrémité et détecteur étant logés à l'intérieur dudit godet de ballast avant leur déploiement.

8. Une balise selon la revendication 6 et la revendication 7, caractérisée de plus par le fait que le moyen de largage comprend un plateau s'étendant jusqu'à l'ouverture du fonds dudit godet de ballast et adapté à se rompre au contact de l'eau.

9. Une balise selon la revendication 7 ou la revendication 8, caractérisée de plus par le fait que ledit assemblage de circuit comprend au moins un tableau de circuit supporté sur ledit godet de ballast et complètement entouré de ladite enveloppe moulée.

10. Une balise selon la revendication 9, caracterisée en plus par le fait que le tableau de circuit est généralement orienté verticalement quand ladite balise flotte à la verticale et est séparé de ladite enveloppe par un espace d'air.

11. Une balise selon la revendication 9 ou la revendication 10, caracterisée en plus par le fait qu'une patte s'étend dudit panneau de circuit à travers ladite enveloppe moulée, ladite enveloppe étant moulée autour de ladite patte, et ladite antenne étant reliée à la partie de ladite patte s'étendant a l'extérieur de ladite enveloppe.

12. Un appareil fabriqué selon une méthode suivant la revendication 1, caracterisée de plus par le fait qu'il comprend une balise detecteur, telle qu'une balise sonar; dans le fait que ledit bâti est adapté pour être éjecté d'un avion et tomber librement sans l'aide d'un parachute jusqu'à la surface de l'eau; et dans le fait que ledit assemblage de circuit comprend un transmetteur et est relié à une antenne attachée audit bati, ladite antenne s'étendant dudit bâti et étant adaptée à être déployée pendant la chute de ladite balise.

13. Une balise selon la revendication 12, caracterisée de plus par le fait que lesdits antenne et bâti sont adaptés à permettre ladite antenne à être rangée avant l'éjection en enroulant l'antenne autour de l'extérieur dudit bati.

14. Une balise selon la revendication 13, caracterisée de plus par le fait que ladite antenne est une lame ayant une largeur bien plus grande que son épaisseur.

15. Une balise selon la revendication 14, caracterisée de plus par le fait que ledit bâti comprend une rainure autour de son extérieur pour recevoir ladite antenne lame quand ladite antenne est enroulée autour avant l'éjection.

16. Une balise selon toutes revendications 3 à 15m caracterisée de plus par le fait que ladite antenne est une projection étroite, plus étroite en largeur que ledit bâti, et est adaptée pour offrir une stabilité aerodynamique pendant la chute de ladite balise en maintenant la balise dans une orientation telle que l'antenne s'étend à l'arrière dans une direction opposée au mouvement de chute de la balise.

17. Une balise selon toutes revendications 3 à 16 caracterisée de plus par le fait que l'assemblage de circuit à l'interieur dudit bâti moule comprend toute la circuiterie de ladite balise.

18. Une balise selon toutes revendications 3 à 17, dans laquelle ladite balise est une balise sonar, et est caracterisée de plus par le fait que ledit détecteur est un hydrophone et ledit assemblage de circuit comprend un moyen pour détecter la presence d'un sous-marin de la puissance dudit hydrophone et un moyen pour declancher ledit transmetteur à transmettre une alarme par ladite antenne jusqu'à un récepteur eloigné.

19. Un appareil selon toutes revendications 3 à 18, caractérisé de plus par le fait que l'enveloppe moulée est moulée d'une seule pièce sans joints.

20. Une balise selon toutes revendications 3 à 19, caractérisée de plus par le fait que ladite balise a une surface plane généralement au centre de sa surface de fonds pour faire pénétrer la balise dans l'eau sur impact, plutôt que de la faire rebondir sur la surface.

0 130 722

FIG I

FIG 2

1

**FIG 3**

**FIG 4**

# FIG 5

0 130 722

FIG 6a

FIG 6b

FIG 6c

FIG 6d

FIG 6e

FIG 6f

FIG 6g